Europäisches Patentamt

(19) European Patent Office

Office européen des brevets

(11) EP 0 493 947 B1

(12) EUROPEAN PATENT SPECIFICATION

(45) Date of publication and mention
of the grant of the patent:
21.04.1999 Bulletin 1999/16

(51) Int. Cl.$^6$: B32B 25/14, C08L 23/02

(21) Application number: 91311888.1

(22) Date of filing: 20.12.1991

(54) **Two-layer thermoplastic elastomer sheet**

Zweischichtige thermoplastische Elastomerfolie

Feuille élastomerique thermoplastique à deux couches

(84) Designated Contracting States:
AT BE CH DE FR GB IT LI LU NL SE

(30) Priority: 21.12.1990 JP 404883/90
03.12.1991 JP 319373/91

(43) Date of publication of application:
08.07.1992 Bulletin 1992/28

(73) Proprietor:
MITSUI CHEMICALS, INC.
Tokyo (JP)

(72) Inventors:
• Hamada, Shunichi,
c/o Mitsui Petrochemical
Tokyo 100 (JP)
• Yonekura, Katsuyoshi,
c/o Mitsui Petrochemical
Tokyo 100 (JP)

(74) Representative:
Cresswell, Thomas Anthony
J.A. KEMP & CO.
14 South Square
Gray's Inn
London WC1R 5LX (GB)

(56) References cited:
EP-A- 0 229 475          EP-A- 0 230 114
EP-A- 0 276 908

• DATABASE WPIL; accession nr. 88-081178 (12);
Derwent Publications, Ltd.; London; GB; &JP-A-
63034138 (SHIN KOBE ELEC MACH)13 Feb. 1988
• PATENT ABSTRACTS OF JAPAN vol. 11, no. 64
(M-565)26 February 1987

**Description**

The present invention relates to a two-layer thermoplastic elastomer sheet, in particular a sheet having excellent vacuum forming properties and which can provide molded products having an excellent soft touch.

Polyvinyl chloride (PVC) resins have been heretofore widely used as materials for interior automotive trim. However, the automotive trim made of the polyvinyl chloride resins have problems in various properties such as heat resistance, low-temperature resistance, heat aging characteristics, light resistance, anti-fogging properties, odor development, lack of soft touch and cheap-looking appearance. For this reason, polyolefin thermoplastic elastomers in which these properties are excellent have attracted attention as replacments for the polyvinyl chloride resins.

In the case of using the polyolefin thermoplastic elastomer for a vacuum forming sheet, the rubber content in the polyolefin thermoplastic elastomer needs to be reduced from the viewpoint of vacuum forming properties. However, if a sheet made of the polyolefin thermoplastic elastomer having a low rubber content is subjected to vacuum forming, the resulting molded product is rigid and lacks a in soft touch (softness).

The present invention seeks to solve the above-mentioned problems. EP-A-229,475 discloses a multiple layer polymeric film for preparing a flexible container. JP-A-63/34,138 discloses a multi-layered sheet for use, inter alia, for interiors of automobiles. JP-A-61/222,842 discloses a two layer sheet for use as an automobile trim component.

The present invention provides a two-layer thermoplastic elastomer sheet comprising a skin layer [I] and a reverse surface layer [II], wherein:

said skin layer [I] comprises a thermoplastic elastomer containing a polyolefin resin (A) in an amount of 1 to 85 parts by weight and an $\alpha$-olefin copolymer rubber (B) in an amount of 99 to 15 parts by weight, the total amount of (A) and (B) being 100 parts by weight;

said reverse surface layer [II] comprises a thermoplastic elastomer containing a polyolefin resin (A) in an amount of 6 to 90 parts by weight and an $\alpha$-olefin copolymer rubber (B) in an amount of 94 to 10 parts by weight, the total amount of (A) and (B) being 100 parts by weight;

the difference $[(I_B)-(II_B)]$ between the amount $(I_B)$ of the $\alpha$-olefin copolymer rubber (B) contained in the thermoplastic elastomer of the skin layer [I] and the amount $(II_B)$ of the $\alpha$-olefin copolymer rubber (B) contained in the thermoplastic elastomer of the reverse surface layer [II] is in the range of 5 to 85 parts by weight; and

at least one of the thermoplastic elastomers of the skin layer [I] and the reverse surface layer [II] is partially crosslinked.

If a light stabilizer is added to the thermoplastic elastomer constituting the skin layer [I] and a flame-retardant is added to the thermoplastic elastomer constituting the reverse surface layer [II], there can be obtained a two-layer thermoplastic elastomer sheet which is capable of producing a molded product which has excellent light resistance and flame retardance and is free from occurrence of bleedout.

At the same time the two-layer thermoplastic elastomer sheet can provide molded products having excellent vacuum forming properties and a soft touch.

The present invention also provides a molded article comprising the two-layer thermoplastic elastomer sheet and the use of the two-layer thermoplastic elastomer sheet in interior automobile trim.

The two-layer thermoplastic elastomer sheet of the invention comprises a skin layer [I] and a reverse surface layer [II], and these layers are composed of thermoplastic elastomers (TPE) of different kinds which differ in the amounts of a polyolefin resin (A) and an $\alpha$-olefin copolymer rubber (B) contained therein.

Examples of the polyolefin resins (A) include homopolymers of ethylene or propylene, and copolymers of ethylene or propylene with a small amount of other polymerizable monomer (e.g., propylene-ethylene copolymer, propylene-1-butene copolymer, propylene-1-hexene copolymer, propylene-4-methyl-1-pentene copolymer). As the above-mentioned other polymerizable monomers there can be mentioned vinyl acetate, ethyl acrylate and methacrylic acid. In the invention, the melt index (ASTM-D-1238-65T, 230 °C) of the polyolefin resin is preferably 0.1 to 100, more preferably 5 to 50.

As the polyolefin resin, a mixture of polyethylene (particularly, low-density polyethylene) and polypropylene having a mixing ratio of 10/90 to 70/30 (polyethylene/polypropylene) can be used to enhance the forming properties (formability) and resistance to damage of the resulting sheet.

The $\alpha$-olefin copolymer rubber (B) employable in the invention is an amorphous elastomeric copolymer containing an olefin as a host component, such as ethylene-propylene copolymer rubber, propylene-ethylene copolymer rubber, ethylene-propylene non-conjugated diene copolymer rubber, propylene-ethylene non-conjugated diene copolymer rubber, ethylene-butadiene copolymer rubber and propylene-butadiene copolymer rubber. Further, the $\alpha$-olefin

copolymer rubber is reduced in flowability or loses flowability by crosslinking when it is mixed with an organic peroxide and kneaded therewith under heating. The non-conjugated diene is a generic name of, for example, dicyclopentadiene, 1,4-hexadiene, dicyclocloatadiene, methylene norbornene and ethylidene norbornene. Of these copolymer rubbers, ethylene-propylene non-conjugated diene copolymer rubber, particularly ethylene-propylene-ethylidenenorbornene copolymer rubber, is preferably used in the invention, because a thermoplastic elastomer molded product having excellent heat resistance, tensile characteristics and impact resilience can be obtained. The Mooney viscosity [$ML_{1+4}$ (100 °C)] of the copolymer rubber is preferably 10 to 120, more preferably 40 to 80. In the case of using a copolymer rubber having Mooney viscosity in the above range, a thermoplastic elastomer product having high tensile characteristics can be obtained. The iodine value (degree of unsaturation) of the copolymer rubber is preferably not more than 16. In the thermoplastic elastomer constituting the skin layer [I], the polyolefin resin (A) is used in an amount of 1 to 85 parts by weight, preferably 20 to 80 parts by weight, more preferably 30 to 50 parts by weight, and the $\alpha$-olefin copolymer rubber (B) is used in an amount of 99 to 15 parts by weight, preferably 80 to 20 parts by weight, more preferably 70 to 50 parts by weight, per 100 parts by weight of the sum of the polyolefin resin (A) and the $\alpha$-olefin copolymer rubber (B).

In the thermoplastic elastomer constituting the reverse surface layer [II], the polyolefin resin (A) is used in an amount of 6 to 90 parts by weight, preferably 20 to 80 parts by weight, more preferably 30 to 50 parts by weight, and the $\alpha$-olefin copolymer rubber (B) is used in an amount of 94 to 10 parts by weight, preferably 80 to 20 parts by weight, more preferably 70 to 50 parts by weight, per 100 parts by weight of the sum of the polyolefin resin (A) and the $\alpha$-olefin copolymer rubber (B). The total amount of the polyolefin resin (A) and the $\alpha$-olefin copolymer rubber (B) is 100 parts by weight. The difference [$(I_B)$ - $(II_B)$] between the amount $(I_B)$ of the $\alpha$-olefin copolymer rubber (B) contained in the thermoplastic elastomer of the skin layer (I) and the amount $(II_B)$ of the $\alpha$-olefin copolymer rubber (B) contained in the thermoplastic elastomer of the reverse surface layer (II) is 5 to 85 parts by weight, preferably 10 to 70 parts by weight, more preferably 15 to 50 parts by weight.

When the two kinds of thermoplastic elastomers having a difference in the above range of the contents of the $\alpha$-olefin copolymer rubber (B) are used, a two-layer sheet having high vacuum forming properties and which is capable of producing a molded product having an especially soft touch is obtained.

In the invention, the thermoplastic elastomers of the skin layer [I] and the reverse surface layer [II] constituting a two-layer sheet may contain a peroxide non-crosslinkable hydrocarbon gum rubber (C) and/or a mineral oil softening agent (D) in addition to the polyolefin resin (A) and the $\alpha$-olefin copolymer rubber (B).

The peroxide non-crosslinkable hydrocarbon gum rubber (C) is a gum rubber of the hydrocarbon type which is not crosslinked and not reduced in flowability even when it is mixed with peroxide and kneaded therewith under heating. Examples of the gum rubber include polyisobutylene, butyl rubber (IIR), propylene-ethylene copolymer rubber having a propylene content of not less than 70 % by mole, and atactic polypropylene. Of these, polyisobutylene and butyl rubber are most preferred because of their good performance and easy handling.

The peroxide non-crosslinkable hydrocarbon gum rubber (C) improves the flowability of a thermoplastic elastomer composition. In the invention, suitably employed is a peroxide non-crosslinkable hydrocarbon gun rubber having a Mooney viscosity [$ML_{1+4}$ (100 °C)] of not more than 60.

The peroxide non-crosslinkable hydrocarbon gum rubber (C) is, for example, used in the invention in an amount of 5 to 100 parts by weight, preferably 10 to 50 parts by weight, more preferably 15 to 40 parts by weight, per 100 parts by weight of the sum of the polyolefin resin (A) and the $\alpha$-olefin copolymer rubber (B).

The mineral oil softening agent (D) employable in the invention is a high-boiling petroleum cut which is generally used for mitigating the intermolecular force of rubber to facilitate processing of the rubber in the roll-processing procedure and assisting the dispersibility of, for example, carbon black, or white carbon, added as a filler, or reducing the rigidness of vulcanized rubber to increase the flexibility and elasticity thereof. The mineral oil softening agent is classified into, for example, the paraffin type, naphthene type and aromatic type.

A molded product obtained from a thermoplastic elastomer composition containing the naphthene type mineral oil softening agent shows less surface tackiness as compared with a molded product obtained from a thermoplastic elastomer composition containing a paraffin type mineral oil softening agent, so that the naphthene type mineral oil softening agent is more preferably used in the invention than the paraffin type mineral oil softening agent.

In the invention, the mineral oil softening agent (D) is, for example, used in an count of 5 to 100 parts by weight, preferably 10 to 80 parts by weight, more preferably 20 to 70 parts by weight, per 100 parts by weight of the sum of the polyolefin resin (A) and the $\alpha$-olefin copolymer rubber (B).

The two-layer thermoplastic elastomer sheet of the invention may contain other additives, provided that the addition of the additives does not mar the object of the invention. Examples of the additives include polyolefin plastics such as high-density polyethylene, intermediate density polyethylene, low-density polyethylene, isotactic polypropylene and propylene-$\alpha$-olefin copolymer; inorganic fillers such as calcium carbonate, calcium silicate, clay, kaolin, talc, silica, diatomaceous earth, mica powder, asbestos alumina, barium sulfate, aluminum sulfate, calcium sulfate, basic magnesium carbonate, molybdenum disulfide, graphite, glass bulb and shirasu balloon; and colorants such as carbon black, titanium oxide, zinc white, blood red, ultramarine blue, Milori blue, azo pigment, nitroso pigment, lake pigment and phthalocyanine pigment.

Further, in the two-layer thermoplastic elastomer sheet of the invention there may be used known heat stabilizers such as heat stabilizers of the phenol type, sulfite type, phenylalkane type, phosphite type and amine type, aging-inhibiting agent, weathering stabilizer, antistatic agent, metallic soap, and lubricant such as wax. They can be added in such an amount as generally used for conventional polyolefin resins or α-olefin copolymer rubbers.

If a light stabilizer such as an ultraviolet absorbing agent, light absorbing agent or hindered amine is added to the thermoplastic elastomer constituting the skin layer [I] of the two-layer thermoplastic elastomer sheet of the invention and a flame-retardant is added to the thermoplastic elastomer constituting the reverse surface layer [II] thereof, there can be obtained a two-layer thermoplastic elastomer sheet capable of providing a molded product which has excellent light resistance and flame retardance and free from occurrence of bleedout that causes a marked deterioration in merchandise value.

However, if the light stabilizer and the flame-retardant are together added to and allowed to present in the same thermoplastic elastomer according to the prior art, occurrence of bleedout could not be prevented.

There is no specific limitation on the light stabilizer and the flame-retardant employable in the invention, provided that they are generally used for conventional polyolefin thermoplastic elastomers.

Examples of the light stabilizers preferably used in the invention include antioxidants of the hindered phenol type represented by pentaerythritol-tetrakis[3-(3,5-di-t-butyl-4-hydroxyphenyl)propionate] and octadecyl-3-(3,5-di-t-butyl-4-hydroxyphenyl)propionate; and light stabilizers of the hindered amine type represented by bis(2,2,6,6-tetramethyl-4-piperidyl) sebacate.

In the case of using the above-mentioned light stabilizers of the hindered amine type, light stabilizers of the benzotriazole type represented by 2-(3-t-butyl-5-methyl-2-hydroxyphenyl)-5-chlorobenzotriazole can be employed in combination. The antioxidants of the hindered phenol type and the light stabilizers of the hindered amine type may be used singly or in combination.

The amount of the light stabilizer used in the invention is generally 0.01 to 0.3 phr, preferably 0.05 to 0.2 phr.

Examples of the flame-retardants preferably used in the invention include inorganic flame-retardants represented by antimony oxide and aluminum hydroxide; and halogen type flame-retardants represented by decabromodiphenyl ether and chlorinated polyethylene.

The organic flame-retardant and the halogen type flame-retardant can be employed singly or in combination.

When the inorganic flame-retardant is used, the amount is generally 10 to 200 phr, preferably 5 to 150 phr. When the halogen type flame-retardant is used, the amount is generally 10 to 100 phr, preferably 25 to 55 phr.

The thermoplastic elastomer as mentioned above can be obtained, for example, by dynamically heat-treating a blend of the above-mentioned components in the presence of organic peroxide to be partially crosslinked.

The expression "dynamically heat-treating a blend" means that a blend is kneaded in the molten state of dissolution.

Examples of organic peroxides employable for preparing the thermoplastic elastomer include dicumyl peroxide, di-tert-butylperoxide, 2,5-dimethyl-2,5-di-(tert-butylperoxy)hexane, 2,5-dimethyl-2,5-di(tert-butylperoxy)hexine-3, 1,3-bis(tert-butylperoxyisopropyl)benzene, 1,1-bis(tert-butylperoxy)-3,3,5-trimethylcyclohexane, n-butyl-4,4-bis(tert-butylperoxy)valerate, benzoyl peroxide, p-chlorobenzoyl peroxide, 2,4-dichlorobenzoyl peroxide, tert-butylperoxybenzoate, tert-butylperbenzoate, tert-butylperoxyisopropyl carbonate, diacetyl peroxide, lauroyl peroxide and tert-butylcumyl peroxide.

Of these, from the viewpoints of odor development and scorching stability, preferred are 2,5-dimethyl-2,5-di(tert-butylperoxy)hexane, 2,5-dimethyl-2,5-di(tert-butylperoxy)hexine-3, 1,3-bis(tert-butylperoxyisopropyl)benzene, 1,1-bis(tert-butylperoxy)-3,3,5-trimethylcyclohexane and n-butyl-4,4-bis(tert-butylperoxy)valerate, and most preferred is 1,3-bis(tert-butylperoxyisopropyl)benzene.

The amount of the organic peroxide used in the invention is generally 0.05 to 3% by weight, preferably 0.1 to 1 % by weight, more preferably 0.1 to 0.5 % by weight, based on the total amount of the above-mentioned components (A), (B) and (C). When the amount of the organic peroxide is within the above range, the obtained thermoplastic elastomer has excellent properties required for rubbers such as heat resistance, tensile characteristics, elastic recovery and impact resilience as well as excellent strength and formability.

An extruder is used as the kneading apparatus in the invention. An unopened extruder is preferably used. Kneading is preferably carried out in an atmosphere of an inert gas such as nitrogen or carbon dioxide. In the invention, kneading is preferably carried out at a temperature such that the half-life of the organic peroxide used becomes shorter than 1 minute (generally at a temperature of 150 to 280 °C, preferably 170 to 240 °C), for 1 to 20 minutes, preferably 1 to 10 minutes. The shearing force applied in the kneading procedure is 10 to $10^4$ sec$^{-1}$, preferably $10^2$ to $10^3$ sec$^{-1}$, in terms of shear rate.

In the aforementioned partially crosslinking processing using the organic peroxide in the invention, there can be added crosslinking assistants such as sulfur, p-quinonedioxime, p,p'-dibenzoylquinonedioxime, N-methyl-N,4-dinitrosoaniline, nitrobenzene, diphenyl guanidine and trimethylolpropane-N,N'-m-phenylenedimaleimide; polyfunctional methacrylate monomers such as divinyl benzene, triallyl cyanurate, ethylene glycol dimethacrylate, diethylene glycol dimethacrylale, polyethylene glycol dimethacrylate, trimethylolpropane trimethacrylate and allyl methacrylate; and polyfunctional vinyl monomers such as vinyl butyrate and vinyl stearate. By the use of these compounds, a homogeneous and moderate crosslinking reaction can be expected. Of these compounds, divinyl benzene is most preferably used because it can be easily handled and is compatible with the α-olefin copolymer rubber and the polyolefin resin which are main components of the blend to be treated. Further, divinyl benzene has solvency action for the organic peroxide and serves as a dispersing assistant of the peroxide, so that a composition having a homogeneous crosslinking effect and good balance between flowability and physical properties can be obtained. In the invention, the crosslinking assistant or the polyfunctional vinyl monomer is for example used in an amount of 0.1 to 2% by weight, preferably 0.3 to 1 % by weight, based on the total amount of the blend to be treated. When they are used in such amounts, a composition which has high flowability and in which there is no change in physical properties caused by the heating history in the molding procedure is obtainable.

Decomposition accelerators such as tertiary amines (e.g., triethylamine, tributylamine and 2,4,6-tris(dimethylamino)phenol) and naphthenic acid salts (e.g., aluminum, cobalt, vanadium, copper, calcium, zirconium, manganese, magnesium, lead and mercury) can be used to accelerate decomposition of the organic peroxide.

As described above, the thermoplastic elastomer is partially crosslinked when it is dynamically heat-treated in the presence of the organic peroxide.

In the invention, the expression "the thermoplastic elastomer is partially crosslinked" means that the gel content measured by the following method is not less than 20%, preferably 20 to 99.5%, more preferably 45 to 98 %.

Measurement of gel content

100 mg of a specimen of the thermoplastic elastomer is weighted out and cut into pieces having a size of 0.5 mm × 0.5 mm × 0.5 mm. The pieces of the specimen are immersed in 30 ml of cyclohexane at 23 °C for 48 hours in a sealed container, then the residue is taken out of the container onto a filter paper, and dried at room temperature for 72 hours until the weight of the specimen becomes constant.

From the weight of the dried residue are subtracted the total weight of the cyclohexane-insoluble components (e.g. fibrous filler and filler, pigment) other than the polymer component and the weight of the polyolefin resin component contained in the specimen before immersing in cyclohexane, and the obtained value is "compensated final weight (Y)".

On the other hand, the weight of the α-olefin copolymer rubber contained in the specimen, namely, the value obtained by subtracting the weight of the cyclohexane-soluble component 1 (e.g., mineral oil and plasticizer) other than the α-olefin copolymer rubber, the weight of the polyolefin resin component 2 and the weight of the cyclohexane-insoluble component 3 (e.g., fibrous filler, filler and pigment) other than the polymer component from the weight of the specimen, is "compensated initial weight (X)".

The gel content is determined by the following formula:

$$\text{Gel content (wt.\%)} = \frac{\text{Compensated final weight (Y)}}{\text{Compensated initial weight (X)}} \times 100$$

In the present invention, the light stabilizers and the flame-retardants are added at any step in the process for producing the thermoplastic elastomer composition. However, it is preferred that the flame-retardant is added to the thermoplastic elastomer using an extruder or Banbury mixer intermediately or some time after the dynamic heat-treatment in the presence of the organic peroxide.

In the invention, the skin layer [I] composed of the thermoplastic elastomer constitutes a skin layer of a vacuum forming molded product. The thickness of the skin layer [I] constituting a skin layer of the vacuum forming molded product is generally 0.01 to 50 mm, preferably 0.10 to 20 mm, while the thickness of the other layer [II] constituting the inner layer of the vacuum forming molded product is generally 0.01 to 100 mm, preferably 0.10 to 50 mm.

The two-layer thermoplastic elastomer sheet of the invention can be obtained by fusing the above-mentioned two thermoplastic elastomers to each other utilizing, for example, a conventionally known extrusion laminating method or injection molding method.

Otherwise, the two-layer thermoplastic elastomer sheet of the invention can be also obtained by fusing two sheets having been beforehand molded, which constitutes the skin layer [I] and the reverse surface layer [II] of the two-layer sheet, at a temperature not lower than the temperature at which at least one of the two sheets is melted using, for example, a calender roll molding machine or a compression molding machine.

Further, the two-layer thermoplastic elastomer sheet of the invention can be also obtained by fusing a beforehand molded sheet which constitutes the skin layer [I] or the reverse surface layer [II] of the two-layer sheet to a sheet which constitutes the reverse surface layer [II] or the skin layer [I] of the two-layer sheet at the time when the latter sheet is prepared by extrusion molding or calendering.

The two-layer thermoplastic elastomer sheet of the invention is generally subjected to vacuum forming with other core materials to produce a molded product which is particularly soft to the touch.

The two-layer thermoplastic elastomer sheet of the invention has excellent vacuum forming properties and can provide a molded product having an excellent soft touch.

Further, the two-layer thermoplastic elastomer sheet of the invention also shows softness, flexibility and warmth in its appearance.

The two-layer thermoplastic elastomer sheet of the invention having the above-mentioned effects can be widely employed for various interior automotive trims such as an instrument panel

The present invention is further described in the following Examples.

Firstly, methods for evaluating vacuum forming properties (formability) and the soft touch of sheets are described.

[Evaluation Method]

(1) Evaluation of vacuum forming properties (formability)

The sheet is subjected to vacuum forming using a drape forming mold until the extensibility of the sheet becomes 250% and 400%, and then occurrence of sheet break is observed.

Condition of drape forming: upper and lower heaters are operated so that the surface temperature of the sheet is 150°C.

(2) Evaluation on the soft touch

The surface of the vacuum forming molded product is touched with fingers, and the touch is classified into 5 levels.

5: very soft
4: soft
3: normal
2: hard
1: very hard

EXAMPLE 1

At first, pellets of two kinds of thermoplastic elastomers (referred to hereinafter as TPE (I) and TPE (II)) were prepared as follows.

[Preparation of pellet of TPE (I)]

37 parts by weight of a isotactic polypropylene resin (i) [melt flow rate: 13 g/10 min (230 °C)], 63 parts by weight of an ethylene-propylene-ethylidenenorbornene terpolymer rubber (ii) [ethylene unit / propylene unit (molar ratio): 78/22, iodine value: 15, Mooney viscosity $ML_{1+4}$ (121 °C): 61], and 30 parts by weight of a naphthene type process oil (iii) were kneaded at 180 °C for 5 minutes in a nitrogen atmosphere using Banbury mixer. Then, the obtained kneadate was cut into angular pellets using a sheet cutter.

Thereafter, with 100 parts by weight of the angular pellets was kneaded 1 part by weight of a mixture (iv) of 20 wt.% of 1,3-bis(tert-butylperoxyisopropyl)benzene, 30 wt.% of divinyl benzene and 50 wt.% of a paraffin mineral oil in Henschel mixer. Then, the obtained kneadate was extruded at 220 °C in a nitrogen atmosphere using an extruder, to prepare pellets of a thermoplastic elastomer [TPE (1)].

[Preparation of pellet of TPE (II)]

The above procedure for preparing the pellets of TPE (I) was repeated except for using the isotactic polypropylene resin (i) in an amount of 50 parts by weight and the ethylene-propylene-ethylidenenorbornene terpolymer rubber (ii) in an amount of 50 parts by weight, to prepare pellets of a thermoplastic elastomer [TPE (II)].

Then, a skin layer sheet of a two-layer sheet was prepared from the above pellets of TPE (I) in the following manner.

[Preparation of TPE (I) sheet]

The pellets of TPE (I) were melted at 220 °C and subjected to calendering using a calendering molding machine (produced by NIPPON Roll, Co., Ltd.), to obtain a thermoplastic elastomer [TPE (I)] sheet having a thickness of 0.3 mm.

[Preparation of two-layer sheet]

The pellets of TPE (II) were melted at 220 °C, and the obtained molten TPE (II) was coated on the reverse surface of the above TPE (I) sheet using a calendering molding machine (produced by NIPPON Roll, Co., Ltd.), to obtain a two-layer thermoplastic elastomer sheet having a thickness of 0.9 mm.
The obtained two-layer thermoplastic elastomer sheet was evaluated for vacuum forming properties and soft touch according to the aforementioned evaluation methods.
The results are set forth in Table 1.

COMPARATIVE EXAMPLE 1

A thermoplastic elastomer [TPE (I)] sheet having a thickness of 0.9 mm was prepared in the same manner as that for preparing the TPE (I) sheet in Example 1.
The thus prepared sheet was evaluated for vacuum forming properties and softness according to the aforementioned evaluation methods.
The results are set forth in Table 1.

COMPARATIVE EXAMPLE 2

The procedure for preparing the TPE (I) sheet in Example 1 was repeated except that pellets of TPE (II) were used instead of the pellets of TPE (I), to prepare a thermoplastic elastomer [TPE (II)] sheet having a thickness of 0.9 mm.
The thus prepared sheet was evaluated for vacuum forming properties and softness according to the aforementioned evaluation methods.
The results are set forth in Table 1.

COMPARATIVE EXAMPLE 3

[Preparation of pellets of TPE (III)]

The procedure for preparing the pellets of TPE (I) in Example 1 was repeated except for using the isotactic polypropylene resin (i) in an amount of 10 parts by weight and the ethylene-propylene-ethylidenenorbornene terpolymer rubber (ii) in an amount of 90 parts by weight, to prepare pellets of a thermoplastic elastomer [TPE (III)].

[Preparation of pellets of TPE (IV))

The procedure for preparing the pellets of TPE (I) in Example 1 was repeated except for using the isotactic polypropylene resin (i) in an amount of 97 parts by weight and the ethylene-propylene-ethylidenenorbornene terpolymer rubber (ii) in an amount of 3 parts by weight, to prepare pellets of a thermoplastic elastomer [TPE (IV)].
Then, a skin layer sheet of a two-layer sheet was prepared from the above pellets of TPE (III) in the following manner.

[Preparation of TPE (III) sheet]

The pellets of TPE (III) were melted at 220 °C and subjected to calendering using a calendering molding machine (produced by NIPPON Roll, Co., Ltd.), to obtain a thermoplastic elastomer [TPE (III)] sheet having a thickness of 0.3 mm.

[Preparation of two-layer sheet]

The pellets of TPE (IV) were melted at 220 °C, and the obtained molten TPE (IV) was coated on the reverse surface of the above TPE (III) sheet using a calendering molding machine (produced by NIPPON Roll, Co., Ltd.), to obtain a two-layer thermoplastic elastomer sheet having a thickness of 0.9 mm.

The obtained two-layer thermoplastic elastomer sheet was evaluated for vacuum forming properties and soft touch according to the aforementioned evaluation methods.

The results are set forth in Table 1.

COMPARATIVE EXAMPLE 4

[Preparation of pellet of TPE (V)]

The procedure for preparing the pellets of TPE (I) in Example 1 was repeated except for using the isotactic polypropylene resin (i) in an amount of 40 parts by weight and the ethylene-propylene-ethylidenenorbornene terpolymer rubber (ii) in an amount of 60 parts by weight, to prepare pellets of a thermoplastic elastomer [TPE (V)].

[Preparation of two-layer sheet]

The pellets of TPE (V) were melted at 220 °C, and the obtained molten TPE (V) was coated on the reverse surface of the TPE (I) sheet of Example 1 using a calendering molding machine (produced by NIPPON Roll, Co., Ltd.), to obtain a two-layer thermoplastic elastomer sheet having a thickness of 0.9 mm.

The obtained two-layer thermoplastic elastomer sheet was evaluated for vacuum forming properties and softness according to the aforementioned evaluation methods.

The results are set forth in Table 1.

Table 1

| | Ex. 1 | Com. Ex. 1 | Com. Ex. 2 | Com. Ex. 3 | Com. Ex. 4 |
|---|---|---|---|---|---|
| Structure of vacuum forming molded product | skin layer of TPE (I), reverse surface layer of TPE (II) | single layer of TPE (I) | single layer of TPE (II) | skin layer of TPE (III), reverse surface layer of TPE (IV) | skin layer of TPE (I), reverse surface layer of TPE (V) |
| Difference of rubber content [part by weight] | 13 | - | - | 87 | 3 |
| Vacuum forming properties | | | | | |
| Extensibility of 250 % | break is not observed | break is not observed | break is not observed | break is observed | break is not observed |
| Extensibility of 400 % | break is not observed | break is observed | break is not observed | break is observed | break is observed |
| Softness Extensibility of 250 % | 5 | 5 | 3 | 5 | 5 |
| Extensibility of 400 % | 5 | 5 | 3 | 5 | 5 |

Note: Difference of rubber content in Table 1 is obtained by the formula of [(rubber content of skin layer) - (rubber content of reverse surface layer)].

Claims

1. A two-layer thermoplastic elastomer sheet comprising a skin layer [I] and a reverse surface layer [II], wherein:

said skin layer [I] comprises a thermoplastic elastomer containing a polyolefin resin (A) in an amount of 1 to 85 parts by weight and an $\alpha$-olefin copolymer rubber (B) in an amount of 99 to 15 parts by weight, the total amount of (A) and (B) being 100 parts by weight;

said reverse surface layer [II] comprises a thermoplastic elastomer containing a polyolefin resin (A) in an amount of 6 to 90 parts by weight and an $\alpha$-olefin copolymer rubber (B) in an amount of 94 to 10 parts by weight, the total amount of (A) and (B) being 100 parts by weight;

the difference $[(I_B) - (II_B)]$ between the amount $(I_B)$ of the $\alpha$-olefin copolymer rubber (B) contained in the thermoplastic elastomer of the skin layer and the amount $(II_B)$ of the $\alpha$-olefin copolymer rubber (B) contained in the thermoplastic elastomer of the reverse surface layer (II) is in the range of 5 to 85 parts by weight; and

at least one of the thermoplastic elastomers of the skin layer [I] and the reverse surface layer [II] is partially crosslinked.

2. A sheet according to claim 1, wherein the thermoplastic elastomer constituting the skin layer [I] contains a peroxide non-crosslinkable hydrocarbon gum rubber (C) and/or a mineral oil softening agent (D).

3. A sheet according to claim 1 or 2, wherein the thermoplastic elastomer constituting the reverse surface layer [II] contains a peroxide non-crosslinkable hydrocarbon gum rubber (C) and/or a mineral oil softening agent (D).

4. A sheet according to any one of claims 1 to 3, wherein the thermoplastic elastomer of the skin layer [I] contains a light stabilizer and the thermoplastic elastomer of the reverse surface layer [II] contains a flame-retardant.

5. A sheet according to any one of the preceding claims, wherein the $\alpha$-olefin copolymer rubber (B) is an ethylene-propylene-ethylidenenorbornene copolymer.

6. A sheet according to any one of the preceding claims, wherein the Mooney viscosity $[ML_{1+4}$ (100°C] of the copolymer rubber (B) is in the range of 10 to 120.

7. A sheet according to any one of the preceding claims in which the iodine value of the copolymer rubber (B) is 16 or less.

8. A sheet according to any one of the preceding claims, wherein the melt index (ASTM-D-1238-65T, 230°C) of the polyolefin resin (A) is in the range of 0.1 to 100.

9. A molded article comprising the two-layer thermoplastic elastomer sheet claimed in any one of the preceding claims.

10. Use of the two-layer elastomer sheet claimed in any one of claims 1 to 8 in interior automobile trim.

**Patentansprüche**

1. Zweischicht-Platte aus thermoplastischem Elastomer, umfassend eine Skin- oder Hautschicht [I] und eine eine rückwärtige Oberfläche bildende Schicht [II], wobei:

die Skin- oder Hautschicht [I] ein thermoplastisches Elastomer, enthaltend ein Polyolefinharz (A) in einer Menge von 1 bis 85 Gewichtsteilen und einen $\alpha$-Olefin-Copolymerkautschuk (B) in einer Menge von 99 bis 15 Gewichtsteilen, wobei die Gesamtmenge von (A) und (B) 100 Gewichtsteile beträgt, umfaßt;

die eine rückwärtige Oberfläche bildende Schicht [II] ein thermoplastisches Elastomer, enthaltend ein Polyolefinharz (A) in einer Menge von 6 bis 90 Gewichtsteilen und einen $\alpha$-Olefin-Copolymerkautschuk (B) in einer Menge von 94 bis 10 Gewichtsteilen, wobei die Gesamtmenge von (A) und (B) 100 Gewichtsteile beträgt, umfaßt;

die Differenz $[(I_B)-(II_B)]$ zwischen der Menge $(I_B)$ des $\alpha$-Olefin-Copolymerkautschuks (B), die in dem thermoplastischen Elastomer der Skin- oder Hautschicht enthalten ist, und der Menge $(II_B)$ des $\alpha$-Olefin-Copolymerkautschuks (B), die in dem thermoplastischen Elastomer der eine rückwärtige Oberfläche bildenden Schicht (II) enthalten ist, im Bereich von 5 bis 85 Gewichtsteilen liegt; und

mindestens eines der thermoplastischen Elastomere der Skin- oder Hautschicht [I] und der eine rückwärtige Oberfläche bildenden Schicht [II] teilweise vernetzt ist.

2. Platte nach Anspruch 1, wobei das die Skin- oder Hautschicht [I] bildende thermoplastische Elastomer einen durch Peroxid nicht vernetzbaren Kohlenwasserstoffgummi-Kautschuk (C) und/oder einen Mineralöl-Weichmacher (D) enthält.

3. Platte nach Anspruch 1 oder 2, wobei das thermoplastische Elastomer, das die eine rückwärtige Oberfläche bildende Schicht [II] bildet, einen durch Peroxid nicht vernetzbaren Kohlenwasserstoffgummi-Kautschuk (C) und/oder einen Mineralöl-Weich-macher (D) enthält.

4. Platte nach einem der Ansprüche 1 bis 3, wobei das thermoplastische Elastomer der Skin- oder Hautschicht [I] einen Lichtschutzzusatz enthält und das thermoplastische Elastomer der eine rückwärtige Oberfläche bildenden Schicht [II] ein Flammschutz-Additiv enthält.

5. Platte nach einem der vorangegangenen Ansprüche, wobei der $\alpha$-Olefin-Copolymerkautschuk (B) ein Ethylen-Propylen-Ethylidennorbornen-Copolymer ist.

6. Platte nach einem der vorangegangenen Ansprüche, wobei die Mooney-Viskosität [ML $_{1+4}$ (100°C)] des Copolymerkautschuks (B) im Bereich von 10 bis 120 liegt.

7. Platte nach einem der vorangegangenen Ansprüche, wobei die Iodzahl des Copolymerkautschuks (B) 16 oder weniger beträgt.

8. Platte nach einem der vorangegangenen Ansprüche, wobei der Schmelzindex (ASTM-D-1238-65T, 230°C) des Polyolefinharzes (A) im Bereich von 0,1 bis 100 liegt.

9. Formgegenstand, umfassend die Zweischicht-Platte aus thermoplastischem Elastomer nach einem der vorangegangenen Ansprüche.

10. Verwendung der Zweischicht-Elastomerplatte nach einem der Ansprüche 1 bis 8 in Innenverkleidungen für Kraftfahrzeuge.

**Revendications**

1. Feuille élastomérique thermoplastique à deux couches, comprenant une couche de peau [I] et une couche superficielle inverse [II], dans laquelle :

   ladite couche de peau [I] comprend un élastomère thermoplastique contenant une résine polyoléfinique (A) en une quantité de 1 à 85 parties en poids, et un caoutchouc copolymérique d'$\alpha$-oléfine (B) en une quantité de 99 à 15 parties en poids, la quantité totale de (A) et de (B) étant égale à 100 parties en poids ;
   ladite couche superficielle inverse [II] comprend un élastomère thermoplastique contenant une résine polyoléfinique (A) en une quantité de 6 à 90 parties en poids, et un caoutchouc copolymérique d'$\alpha$-oléfine (B) en une quantité de 94 à 10 parties en poids, la quantité totale de (A) et de (B) étant égale à 100 parties en poids ;
   la différence [($I_B$) - ($II_B$)] entre la quantité ($I_B$) du caoutchouc copolymérique d'$\alpha$-oléfine (B) contenu dans l'élastomère thermoplastique de la couche de peau et la quantité ($II_B$) du caoutchouc copolymérique d'$\alpha$-oléfine (B) contenu dans l'élastomère thermoplastique de la couche superficielle inverse (II), se situe dans l'intervalle allant de 5 à 85 parties en poids; et
   au moins l'un des élastomères thermoplastiques de la couche de peau [I] et de la couche superficielle inverse [II] est partiellement réticulé.

2. Feuille selon la revendication 1, dans laquelle l'élastomère thermoplastique constituant la couche de peau [I] contient un caoutchouc gommeux d'hydrocarbure non réticulable par un peroxyde (C) et/ou un agent d'amollissement de type huile minérale (D).

3. Feuille selon la revendication 1 ou 2, dans laquelle l'élastomère thermoplastique constituant la couche superficielle inverse [II] contient un caoutchouc gommeux d'hydrocarbure non réticulable par un peroxyde (C) et/ou un agent d'amollissement de type huile minérale (D).

4. Feuille selon l'une quelconque des revendications 1 à 3, dans laquelle l'élastomère thermoplastique de la couche de peau [I] contient un stabilisant à la lumière, et l'élastomère thermoplastique de la couche superficielle inverse [II] contient un agent retardateur de flamme.

5. Feuille selon l'une quelconque des précédentes revendications, dans laquelle le caoutchouc copolymérique d'$\alpha$-oléfine (B) est un copolymère éthylène/propylène/éthylidènenorbornène.

6. Feuille selon l'une quelconque des précédentes revendications, dans laquelle la viscosité Mooney [ML$_{1+4}$ (100 °C)] du caoutchouc copolymérique (B) se situe dans l'intervalle allant de 10 à 120.

7. Feuille selon l'une quelconque des précédentes revendications, dans laquelle l'indice d'iode du caoutchouc copolymérique (B) est inférieur ou égal à 16.

8. Feuille selon l'une quelconque des précédentes revendications, dans laquelle l'indice de fluidité à chaud (ASTM D-1238-65T, 230 °C) de la résine polyoléfinique (A) se situe dans l'intervalle allant de 0,1 à 100.

9. Article moulé comprenant la feuille élastomérique thermoplastique à deux couches selon l'une quelconque des précédentes revendications.

10. Utilisation de la feuille élastomérique à deux couches selon l'une quelconque des revendications 1 à 8, dans des garnitures intérieures automobiles.